# EUROPEAN PATENT SPECIFICATION

(11) **EP 3 544 763 B1**
(45) Date of publication and mention of the grant of the patent: **22.07.2020**
(21) Application number: 17801063.3
(22) Date of filing: 23.11.2017
(51) Int. Cl.: B23K 1/19, B23K 103/14, B23K 35/32, B23K 35/362, B23K 35/02, C22C 14/00

(54) **METHOD FOR JOINING AND/OR REPAIRING SUBSTRATES OF TITANIUM ALUMINIDE ALLOYS**
VERFAHREN ZUM FÜGEN UND/ODER REPARIEREN VON SUBSTRATEN AUS TITANALUMINIDLEGIERUNGEN
PROCÉDÉ POUR ASSEMBLER ET/OU RÉPARER DES SUBSTRATS D'ALLIAGES D'ALUMINURE DE TITANE

(30) Priority: 25.11.2016 EP 16200819
(43) Date of publication of application: 02.10.2019
(73) Proprietor: Helmholtz-Zentrum Geesthacht Zentrum für Material- und Küstenforschung GmbH, 21502 Geesthacht (DE)
(72) Inventor: PYCZAK, Florian, 21029 Hamburg (DE); OEHRING, Michael, 21502 Geesthacht (DE); LORENZ, Uwe, 21397 Bardowick (DE); HAUSCHILDT, Katja, 21033 Hamburg (DE)
(74) Representative: Uexküll & Stolberg
(86) International application number: PCT/EP2017/080277
(87) International publication number: WO 2018/096068

(56) References cited:
- JP-A- H0 716 764
- US-A- 4 780 374
- US-A1- 2015 041 522
- US-B1- 6 758 388

## Description

The present invention relates to a method for joining or repairing substrates of γ-titanium aluminide alloys (γ-TiAl alloys) using transient liquid phase (TLP) bonding, and to a braze alloy useful for performing said joining or repairing.

### BACKGROUND OF THE INVENTION

Titanium aluminide-base intermetallic alloys have received much attention as a material for various applications in aerospace, automotive and power generation industries. This is in particular true for γ-TiAl alloys. γ-TiAl alloys are those TiAl alloys which contain an intermetallic γ-TiAl phase, preferably as the main phase. γ-TiAl alloy has a L1₀-structure (space group: P4/mmm, Pearson Symbol: tP2). This structure can be visualized as a tetragonally distorted face centered cubic lattice. Alternate (002) planes are occupied by the two different species, Ti and Al, respectively. The structure of γ-TiAl is reviewed in detail in J. Braun et al. "Experimental investigations of the structure and stability of the TiAl phase", Zeitschrift für Metallkunde, 86(12), 870-876 (1995).

Nowadays, the intermetallic TiAl-base alloys of great engineering interest follow the chemical compositions in the range Ti-(42-49)Al-(0.1-10)X (at.%), where X represents elements selected from Zr, V, Nb, Ta, Cr, Mo, W, Mn, Si, B, C or combinations thereof. They possess interesting thermo-physical properties including a high melting point, low density of 3.9-4.2 g·cm⁻³, high Young's modulus, low diffusion coefficient, good oxidation and corrosion resistance and high ignition resistance. The main drawbacks of these alloys are, however, their poor ductility and inherent brittleness (see F. Iqbal, "Fracture Mechanisms of γ-TiAl Alloys Investigated by In-situ Experiments in a Scanning Electron and Atomic Force Microscope", Doctorate Thesis, Erlangen 2012). Titanium aluminide alloys cannot sustain increasing load after crack initiation, especially at room temperature.

The intrinsic poor workability of titanium aluminide alloys limits their practical use in some cases. Therefore, it is necessary to develop a suitable joining process to join substrates made of these kinds of alloys. Conventional joining techniques, such as brazing, diffusion bonding and fusion bonding have been investigated.

Accordingly it is necessary to develop a process for joining substrates and/or repair cracks in substrates of titanium aluminide-base alloys which provide structures of high structural homogeneity of the bonding zone.

Joints of titanium aluminide base-alloys made by diffusion bonding using Tini 67 as a filler alloy were studied in A. Guedes et al "Diffusion Brazing of a γ-TiAl Alloy Using Tini 67: Microstructural Evolution of the Interface" in Materials Science Forum 587-588 (2008) 425. Diffusion welded samples were joined at 1000°C and 1100°C, respectively, and it was observed that in the course of heating, several single phase layers were formed within the filler alloy due to the solid state interdiffusion of Ti and Ni atoms. After joining several phases were still detected at the welding interface.

D. Herrmann et al. "Diffusion Bonding of y(TiAl) Alloys: Influence of Composition, microstructure, and Mechanical Properties", Metallurgical and Materials Transactions A, Vol. 40A (2009), 1881-1902 also discloses joints of titanium aluminide base-alloys by solid state diffusion bonding, where surfaces of cylindrical specimen were ground and carefully cleaned, the workpieces were joined and heated to a bonding temperature of 1000°C and a bonding stress was applied.

Unfortunately, many difficulties, such as the necessity for high machining precision of the mating surface and the time required for diffusion bonding, low service temperature of the brazing joint, and heat-sensitive cracking during fusion bonding, have been encountered when applying these processes to join substrates of titanium aluminide-base alloys. Further, effective methods for repairing damages in workpieces of titanium aluminide-base alloys will still have to be developed, as they are not available yet. Normally a defective workpiece will have to be exchanged for another, which makes these alloys less attractive.

In recent years, a novel bonding technique which combines the advantages of diffusion bonding and brazing, referred-to as transient liquid phase (TLP) bonding has been gaining attention for joining materials. A a full description of the underlying physical processes is given by MacDonald and Eagar, "Transient Liquid Phase Bonding", Annu. Rev. Mater. Sci. 1992. 22, pages 23-46. The essential requirement is that the liquidus temperature of a substrate alloy varies with composition. It is then possible for the variation in composition of an inhomogeneous alloy to cause localized melting at temperatures where the bulk of the material remains solid. If liquid and solid of different compositions are in contact, diffusion will change the concentration profile and can cause an initial widening of the liquid layer, followed by solidification, even during an isothermal heat treatment. The most important difference between diffusion bonding and transient liquid phase (TLP) bonding is the solidification behavior of the liquid phase formed during bonding via TLP.

In application of TLP, a thin interlayer material, such as a braze foil comprising one or more melting point depressants, is clamped at the faying surface. Thereafter the substrates and braze foil are brought to an elevated temperature above the melting point of the braze foil but below the melting point of the substrates to be joined. Bonding results as melting point depressants diffuse into the substrate which results in isothermal solidification.

In conventional brazing processes, the eutectic liquid of brazing solidifies gradually with decreasing temperature. During TLP the braze alloy melts and the composition equalization with the substrate raises the melting temperature in the brazing zone and results in isothermal solidification. TLP bonding is capable of producing nearly invisible joints which have strengths and other properties similar to the base metal.

Duan et al. "Transient Liquid Phase (TLP) Bonding of TiAl Using Various Insert Foils", Science and Technology of Welding and Joining 2004 (9) 513-518 discloses a method for joining substrates of titanium aluminide-base alloys using transient liquid phase bonding. In this document Ti foil combined with Cu, Ni or Fe foils has been chosen as insert metals. During bonding, Cu, Ni, Fe act as melting point depressants (MPD) of elemental Ti because eutectic reactions are expected to occur at specific temperatures.

TLP bonding using Ti foils combined with Cu, Ni or Fe foils still requires the high machining precision encountered in diffusion bonding and leads to visible joining layers. Further, the method is not suitable for repairing cracks in substrates of titanium aluminides.

Document US6758388 discloses different titanium aluminide (Ti-Al) honeycomb panel structures formed from a gamma-based Ti-Al or orthorhombic Ti-Al honeycomb core brazed to a gamma-Ti-Al or orthorhombic-Ti-Al facing sheet(s), where a metal braze filler foil containing copper and one or more other metals is used to join the faying surface of the honeycomb core and the faying surface of the facing sheet(s) .

### SUMMARY OF THE INVENTION

It has been found that the joints produced by the methods according to the prior art are not satisfactory in providing joints which have strengths and other properties of sufficient similarity to the base titanium aluminide alloy. Accordingly it is an object of the present invention to provide a method for joining substrates of titanium aluminide-base alloys, especially γ-TiAl alloys, using transient liquid phase (TLP) bonding providing joints which have improved strength and ductility in view of those produced by the prior art, and to a braze material useful for performing said bonding. The method or methods should be applicable for joining two γ-TiAl-base alloy substrates as well as for repairing cracks in γ-TiAl-base alloy substrates.

According to a first aspect of the present invention this object is also achieved by a method of bonding at a faying surface two substrates of γ-titanium aluminide alloy which has a β-single phase region at elevated temperatures, according to claim 1.

According to a second aspect of the present invention this object is also achieved by a method for repairing a crack at a crack interface in a substrate of γ-titanium aluminide alloy having a β-single phase region at elevated temperatures, according to claim 2.

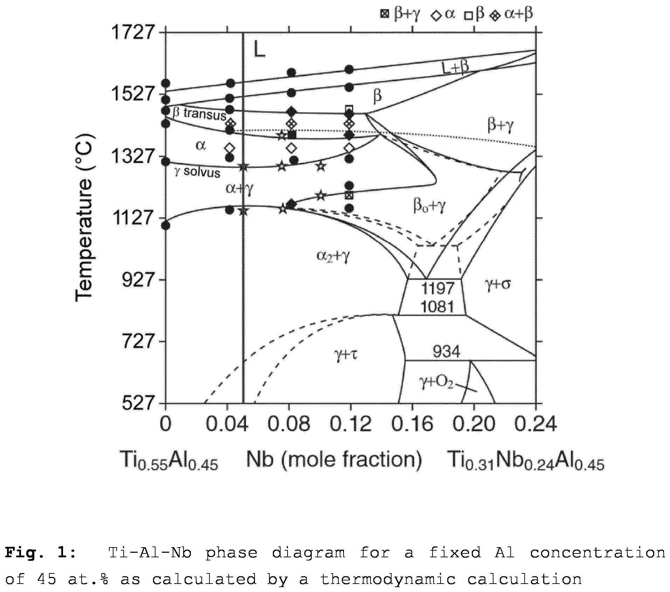

Phase diagrams of γ-titanium aluminide alloys contain certain phase transition temperatures. The γ-solvus temperature is the temperature at which the γ-structure of the titanium aluminide alloy is dissolved. It depends from the alloying contents and is determined using differential thermal analysis (DTA). The β-Ti phase has a BCC-A2-structure (space group: Im3m, Pearson Symbol: cI2). The β-transition temperature is likewise determined using differential thermal analysis (DTA). **Fig. 1** depicts a Ti-Al-Nb phase diagram for a fixed Al concentration of 45 at.% as calculated by a thermodynamic calculation. Such Al concentrations with varying Nb contents between 5 and 10 at.% and optionally further additions of up to 0.5 wt.% of B and/or C are present in TNB-type TiAl alloys.

Preferably, the elevated bonding temperature is chosen between 1400°C and 1475°C, but in any case in the β-single phase region of the substrate.

The time sufficient to cause the substrates to be joined by transient liquid phase bonding, i.e. to cause isothermal solidification to occur, will depend on the alloy, the braze material and the braze material thickness used. The time may e.g. be chosen starting from 0.5h, preferably between 1h and 48h, preferably between 3h and 36h, more preferably between 6h and 30h, such as 12h, 18h, 24h or 30h.

The heating and cooling rates can be varied. For example, the heating and cooling rates may be kept at a constant rate of about 20 K min⁻¹. It is also possible to integrate heat treatments into the last phase of the bonding process, whereby the substrate is subjected to elevated temperatures again.

According to an embodiment of the first and second aspects of the present invention the γ-titanium aluminide alloy of the substrate has a composition within the range of Ti-(42-49)Al-(0.1-10)X (at.%), where X represents elements selected from Zr, V, Nb, Ta, Cr, Mo, W, Mn, Si, B, C or combinations thereof. Preferably, the titanium aluminide alloy of the substrate has a composition within the range of Ti-(42-49)Al-(3-9)Nb(0.1-3)Y (at.%), where Y represents elements selected from Zr, V, Ta, Cr, Mo, W, Mn, Si, B, C or combinations thereof. Further alloys are TNB-type alloys which have a composition Ti-45Al-(5-10)Nb(0-0.5)B(0-0.5)C (at.%), such as those as described in DE 197 35 841 A1, or TNM™ alloys with compositions in the range Ti-43.5Al-4Nb-1Mo-0.1B to Ti-44Al-4Nb-0.7Mo-0.1B(at.%), which are all commercially available from AMG Titanium Alloys and Coatings GfE Gesellschaft für Elektrometallurgie mbH, Nürnberg, Germany.

According to the first and second aspects of the present invention the braze material is a titanium alloy of the general composition Ti-(10-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. Preferably, the braze material is selected from titanium alloys of the composition Ti-20Al-20Fe (at.%), Ti-25Al-20Fe (at.%), Ti-20Al-20Ni (at.%) and Ti-30Al-18Ni (at.%).

The braze material is preferably a braze foil or a braze powder. However, it may be also applied by other methods, e.g. deposited by methods like electroplating or vacuum deposition procedures.

In order to facilitate application of the braze powder, the braze powder may be admixed with an organic welding flux material before application, especially when the braze powder is applied by means of a syringe onto the crack surface of the substrate. The organic welding flux is advantageously selected from viscous organic materials which are sprayable or extrudable at temperatures between room temperature and about 50°C to 60°C, and is preferably selected from the group consisting of beeswax, paraffin wax, palm oil, olive oil, oleic acid and mixtures thereof.

In the context of the present invention, the amounts of metal in the alloys are given in atomic% (at.%), titanium making up the remainder of the alloy to 100 at.%.

### DETAILED DESCRIPTION OF THE INVENTION

The titanium aluminide alloy from which the substrates are formed, is a titanium aluminide alloy of the general composition Ti-(42-49)Al-(0.1-10)X (at.%), where X represents one or more elements selected from the group of Zr, V, Nb, Ta, Cr, Mo, W, Mn, Si, B, C. Preferred alloys are e.g. commercially available alloys such as TNB-V5 with a composition of Ti-45Al-5Nb-0.2B-0.2C (at.%), TNB-V2 with a composition of Ti-45Al-8Nb-0.2C (at.%), or TNM™ with a composition of Ti-43.5Al-4Nb-1Mo-0.1B (at.%) .

According to an aspect of the present invention the braze material useful for being applied in a method according to the present invention is a titanium aluminide alloy of the general composition Ti-(0-35)Al-(0-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. Preferred braze materials are of the general composition Ti-(10-35)Al-(0-9.5)X-(5-30)Z (at.%) or Ti-(0-35)Al-(0.1-10)X-(5-30)Z (at.%), such as Ti-(10-35)Al-(0.1-9.5)X-(10-25)Z (at.%), where X and Z are as defined above. Exemplary alloys are Ti-20Al-20Fe (at.%), Ti-25Al-20Fe (at.%), Ti-20Al-20Ni (at.%) and Ti-30Al-18Ni (at.%).

It is generally preferred that, with exception of elements Z, the braze alloy comprises the same elements as the alloy of the substrate. The contents of elements Al and X are advantageously either selected slightly below or equal to their content in the substrate. Alternatively, the contents of elements Al and/or X are selected slightly above their content in the substrate. In the former case no or nearly no diffusion based equilibration of these elements between braze zone and substrate is necessary. In the latter case especially by carefully selecting type and content of element X the presence of unordered phases in the braze zone, which allow faster diffusion, can be promoted.

The elevated temperature (bonding temperature), to which the substrate(s) and braze alloy are subjected, is chosen to a temperature within to an elevated temperature in the β-single phase region of the substrate alloy. Preferably, the bonding temperature is chosen within the range between 1400°C and 1475°C, provided the temperature is in the β-single phase region of the γ-titanium aluminide alloy.

Preferably, the braze foil has a thickness of 5 µm or more, preferably from 5 µm to 500 µm, more preferably from 10 µm to 300 µm, such as about 50 µm, 100 µm, 200 µm or 300 µm.

The joining is preferably performed in vacuum. The background vacuum can be chosen in a wide variety of pressures such as from 1x10⁻³ Pa to 1Pa, e.g. about 3x10⁻³ Pa. The joining can also be performed at ambient pressure under a protective gas atmosphere. Preferred protective gases are selected among nitrogen and argon.

According to an embodiment the present invention relates to a method of bonding two substrates of titanium aluminide-base alloy of the TNB or TNM™ type, comprising the steps of applying a braze foil or a braze powder of a titanium alloy of the general composition Ti-(10-35 at.%) Al-(0-10 at.%) X-(5-30 at.%) Y, where X represents one or more elements selected from the group of Zr, V, Nb, Ta, Cr, Mo, W, Mn, Si, B, C, and Z represents one or more elements selected from the group of Fe and Ni, at the faying surface of the substrates, and subjecting the substrates and braze foil or braze powder to an elevated temperature in the β-single phase region of the titanium aluminide-base alloy, and joining the substrates by transient liquid phase bonding. According to another embodiment, the present invention relates to a method of repairing a crack at a crack interface in a substrate of titanium aluminide-base alloy of the TNB or TNM™ type, comprising the steps of applying a braze foil or a braze powder of a titanium alloy of the general composition Ti-(10-35 at.%) Al-(0-10 at.%) X-(5-30 at.%)Z, where X represents one or more elements selected from the group of Zr, V, Nb, Ta, Cr, Mo, W, Mn, Si, B, C, and Z represents one or more elements selected from the group of Fe and Ni, into the crack interface, and subjecting the substrates and braze foil or braze powder to an elevated temperature in the β-single phase region of the titanium aluminide-base alloy, and joining the substrates by transient liquid phase bonding.

Preferably, the titanium aluminide-base alloy is selected from the group consisting of TNB-V5 (Ti-45Al-5Nb-0.2B-0.2C) and TNB-V2 (Ti-45Al-8Nb-0.2C). More preferably, the titanium aluminide alloy is a TNM™ type alloy (Ti-43.5Al-4Nb-1Mo-0.1B).

Also in these embodiments, the braze foil preferably has a thickness of 5 µm or more, preferably from 5 µm to 500 µm, more preferably from 10 µm to 300 µm, such as about 50 µm, 100 µm, 200 µm or 300 µm.

Also in these embodiments, the joining is preferably performed in vacuum. The background vacuum can be chosen in a wide variety of pressures such as from 1x10⁻³ Pa to 1Pa, e.g. about 3x10⁻³ Pa. The joining can also be performed at ambient pressure under a protective gas atmosphere. Preferred protective gases are selected among nitrogen and argon.

Also in these embodiments, the heating and cooling rates may be kept at a constant rate of about 20 K min⁻¹. According to another embodiment the substrate may be subjected to an elevated temperature towards the end of the bonding process.

The present invention also relates to a braze alloy useful for transient liquid phase (TLP) bonding of a substrate of γ-titanium aluminide alloy, the braze alloy having the general composition Ti-(10-35)Al-(0.1-10)X-(5-30)Z (at.%), where X represents one or more elements selected from the group of Zr, V, Nb, Ta, Cr, Mo, W, Mn, Si, B, C, and Z represents one or more elements selected from the group of Fe and Ni. According to an embodiment of the present invention, the braze alloy may braze alloy be present in form of a foil or a powder, and if in the form of a powder, it may be present in admixture with an organic welding flux. The organic welding flux may be selected from the group consisting of beeswax, paraffin wax, palm oil, olive oil, oleic acid and mixtures thereof.

### EXAMPLE

Two substrates of TNM were joined using a method according to the present invention, where a braze foil of a titanium alloy of the composition Ti-15Fe was applied at the faying surface of the substrates, and thereafter the substrates and braze foil were subjected to an elevated temperature of 1450°C (i.e. in the β-phase region) for 2 hours under vacuum, thereby joining the substrates by transient liquid phase bonding. Subsequently, the brazed specimen was cooled with a cooling rate of 20 K/min.

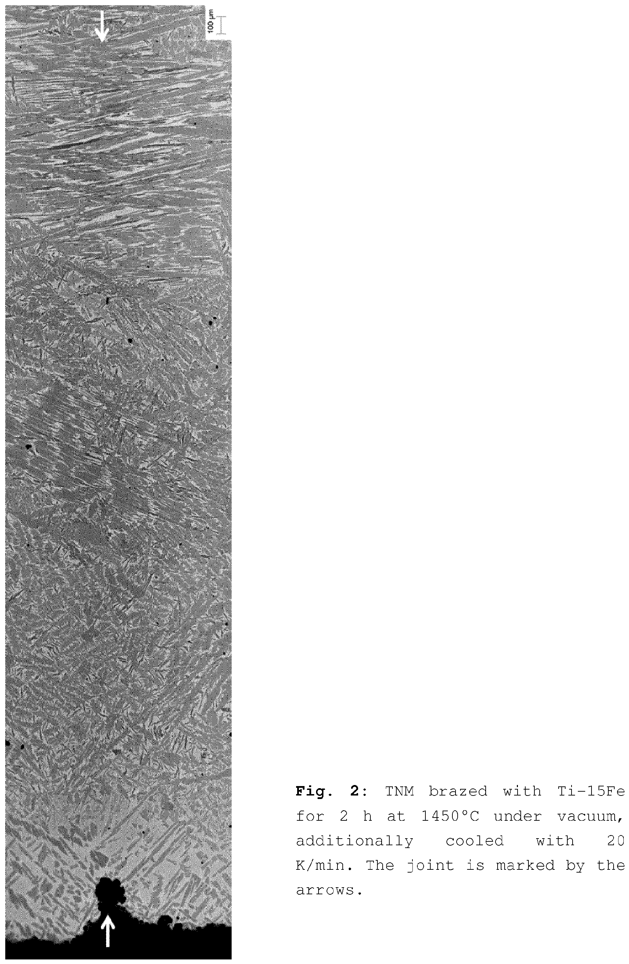

The microstructure of the produced joint is shown in **Fig. 2****.** Surprisingly no visible difference in microstructure between the substrate material and the joint zone is visible in **Fig. 2****.** The joint is marked by the arrows.

## Claims

1. A method of bonding at a faying surface two substrates of γ-titanium aluminide alloy which has a composition within the range of Ti-(42-49)Al-(0.1-10)X in at.%, where X represents elements selected from Zr, V, Nb, Ta, Cr, Mo, W, Mn, Si, B, C or combinations thereof and which exhibits a β-single phase region at elevated temperatures, comprising the steps of applying a braze material of a titanium alloy of the general composition Ti-(10-35)Al-(0-10)X-(5-30)Z in at.%, where X represents one or more elements selected from the group of Zr, V, Nb, Ta, Cr, Mo, W, Mn, Si, B, C, and Z represents one or more elements selected from the group of Fe and Ni, and wherein those alloying elements present in the substrate material other than titanium and aluminum are present in quantities in at.% up to their content in the substrate material, the remainder being titanium, at the faying surface of the substrates, and subjecting the substrates and braze material to an elevated temperature in the β-single phase region, and joining the substrates by transient liquid phase bonding.

2. A method for repairing a crack at a crack interface in a substrate of γ-titanium aluminide alloy which has a composition within the range of Ti-(42-49)Al-(0.1-10)X in at.%, where X represents elements selected from Zr, V, Nb, Ta, Cr, Mo, W, Mn, Si, B, C or combinations thereof and which exhibits a β-single phase region at elevated temperatures, comprising the steps of applying a braze material of a titanium alloy of the general composition Ti-(10-35)Al-(0-10)X-(5-30)Z in at.%, where X represents one or more elements selected from the group of Zr, V, Nb, Ta, Cr, Mo, W, Mn, Si, B, C, and Z represents one or more elements selected from the group of Fe and Ni, and wherein those alloying elements present in the substrate material other than titanium and aluminum are present in quantities (at.%) up to their content in the substrate material, the remainder being titanium, and subjecting the substrate and braze material to an elevated temperature in the β-single phase region of the substrate, and joining the substrate at the crack interface by transient liquid phase bonding.

3. The method of any of claims 1 or 2, wherein the elevated bonding temperature is chosen between within the range between 1400°C and 1475°C, provided the temperature is in the β-single phase region of the γ-titanium aluminide alloy.

4. The method of claim 1, wherein the braze material is selected from titanium alloys of the composition Ti-20Al-20Fe in at.%, Ti-25Al-20Fe in at.%, Ti-20Al-20Ni in at.% and Ti-30Al-18Ni (at.%).

5. The method of any of claims 1 to 4 wherein the titanium aluminide alloy of the substrate is an alloy of the composition Ti-45Al-(5-10)Nb(0-0.5)B(0-0.5)C in at.%.

6. The method of any of claims 1 to 5 wherein the titanium aluminide alloy of the substrate is selected from the group consisting of Ti-45Al-5Nb-0.2B-0.2C, Ti-45Al-8Nb-0.2C, and Ti-43.5Al-4Nb-1Mo-0.1B.

7. The method of any of the previous claims wherein the braze material is a braze foil or a braze powder.

8. The method of claim 7, wherein the braze material is present in the form of a powder in admixture with an organic welding flux.

9. The method of claim 8 wherein the organic welding flux is selected from the group consisting of beeswax, paraffin wax, palm oil, olive oil, oleic acid and mixtures thereof.

## Patentansprüche

1. Verfahren zum Verbinden von zwei Substraten einer γ-Titanaluminidlegierung mit einer Zusammensetzung im Bereich von Ti-(42-49)Al-(0,1-10)X, in At.%, an einer Stoßfläche, wobei X Elemente darstellt, die ausgewählt sind aus Zr, V, Nb, Ta, Cr, Mo, W, Mn, Si, B, C oder Kombinationen davon, und die bei erhöhten Temperaturen eine β-Einzelphasenregion aufweist, bei dem in Schritten auf die Stoßfläche der Substrate ein Lötmaterial einer Titan-Legierung der allgemeinen Zusammensetzung Ti-(10-35)Al-(0-10)X-(5-30)Z, in At.%, wobei X ein oder mehrere Elemente darstellt, die aus der Gruppe von Zr, V, Nb, Ta, Cr, Mo, W, Mn, Si, B, C ausgewählt sind und Z ein oder mehrere Elemente darstellt, die aus der Gruppe von Fe und Ni ausgewählt sind, und wobei jene Legierungselemente, die in dem Substratmaterial mit Ausnahme von Titan und Aluminium vorhanden sind, in Mengen, in At.%, bis zu ihrem Gehalt im Substratmaterial vorhanden sind, aufgebracht wird und die Substrate und das Lötmaterial einer erhöhten Temperatur in der β-Einzelphasenregion ausgesetzt werden und die Substrate mittels Transient-Liquid-Phase-Löten verbunden werden.

2. Verfahren zur Reparatur eines Risses an einer Rissgrenzfläche in einem Substrat aus einer γ-Titanaluminidlegierung mit einer Zusammensetzung im Bereich von Ti-(42-49)Al-(0,1-10)X, At.%, wobei X Elemente darstellt, die ausgewählt sind aus Zr, V, Nb, Ta, Cr, Mo, W, Mn, Si, B, C oder Kombinationen davon, und die bei erhöhten Temperaturen eine β-Einzelphasenregion aufweist, bei dem in Schritten ein Lötmaterial einer Titan-Legierung der allgemeinen Zusammensetzung Ti-(10-35)Al-(0-10)X-(5-30)Z, in At.%, wobei X ein oder mehrere Elemente darstellt, die aus der Gruppe von Zr, V, Nb, Ta, Cr, Mo, W, Mn, Si, B, C ausgewählt sind und Z ein oder mehrere Elemente darstellt, die aus der Gruppe von Fe und Ni ausgewählt sind, und wobei jene Legierungselemente, die in dem Substratmaterial mit Ausnahme von Titan und Aluminium vorhanden sind, in Mengen, in At.%, bis zu ihrem Gehalt im Substratmaterial vorhanden sind, aufgebracht wird und das Substrat und das Lötmaterial einer erhöhten Temperatur in der β-Einzelphasenregion ausgesetzt werden und das Substrat mittels Transient-Liquid-Phase-Löten an der Rissgrenzfläche verbunden wird.

3. Verfahren nach einem der Ansprüche 1 oder 2, wobei die erhöhte Bindungstemperatur zwischen 1400°C und 1475°C gewählt wird, vorausgesetzt, dass die Temperatur in der β-Einzelphasenregion der γ-Titanaluminidlegierung liegt.

4. Verfahren nach Anspruch 1, wobei das Lötmaterial ausgewählt ist aus Titanlegierungen der Zusammensetzung Ti-20Al-20Fe, in At.%, Ti-25Al-20Fe, in At.%, Ti-20Al-20Ni, in At.%, und Ti-30Al-18Ni, in At.%.

5. Verfahren nach einem der Ansprüche 1 bis 4, wobei die Titanaluminidlegierung des Substrats eine Legierung der Zusammensetzung Ti-45Al-(5-10)Nb(0-0,5)B(0-0,5)C, in At.%, ist.

6. Verfahren nach einem der Ansprüche 1 bis 5, wobei die Titanaluminidlegierung des Substrats ausgewählt ist aus der Gruppe bestehend aus Ti-45Al-5Nb-0,2B-0,2C, Ti-45Al-8Nb-0,2C und Ti-43,5Al-4Nb-1Mo-0,1B.

7. Verfahren nach einem der vorhergehenden Ansprüche, wobei das Lötmaterial eine Lötfolie oder ein Lötpulver ist.

8. Verfahren nach Anspruch 7, wobei das Lötmaterial in Form eines Pulvers in Beimischung zu einem organischen Lötflussmittel vorliegt.

9. Verfahren nach Anspruch 8, wobei das organische Lötflussmittel ausgewählt ist aus der Gruppe bestehend aus Bienenwachs, Paraffinwachs, Palmöl, Olivenöl, Ölsäure und Gemischen davon.

## Revendications

1. Procédé de liaison, à une surface de liaison, de deux substrats en alliage d'aluminure de titane γ dont la composition, exprimée en pourcentages atomiques (% at), est comprise dans les intervalles indiqués dans la formule
Ti - (42-49)Al - (0,1-10)X,
X représentant des éléments choisis parmi Zr, V, Nb, Ta, Cr, Mo, W, Mn, Si, B, C et leurs combinaisons,
et qui présente un domaine monophasé β à des températures élevées, lequel procédé comprend les étapes consistant à
- appliquer, à la surface de liaison entre les substrats, un matériau de brasage en un alliage de titane dont la composition générale, en % at, répond à la formule
Ti - (10-35)Al - (0-10)X - (5-30)Z,
X représentant un ou plusieurs élément(s) choisi(s) dans l'ensemble constitué par Zr, V, Nb, Ta, Cr, Mo, W, Mn, Si, B et C, et Z représentant un ou plusieurs élément(s) choisi(s) dans l'ensemble constitué par Fe et Ni,
et dans lequel les éléments d'alliage, autres que le titane et l'aluminium, présents dans le matériau de substrat se trouvent en des quantités, exprimées en % at, pouvant atteindre leur teneur dans le matériau de substrat, le reste étant constitué de titane,
- et exposer les substrats et le matériau de brasage à une température élevée, de valeur située dans le domaine monophasé β, et assembler les substrats par liaison en phase liquide transitoire.

2. Procédé visant à réparer une fissure à une interface de fissure dans un substrat en alliage d'aluminure de titane γ dont la composition, exprimée en % at, est comprise dans les intervalles indiqués dans la formule
Ti - (42-49)Al - (0,1-10)X,
X représentant des éléments choisis parmi Zr, V, Nb, Ta, Cr, Mo, W, Mn, Si, B, C et leurs combinaisons,
et qui présente un domaine monophasé β à des températures élevées, lequel procédé comprend les étapes consistant à
- appliquer un matériau de brasage en un alliage de titane dont la composition générale, en % at, répond à la formule
Ti - (10-35)Al - (0-10)X - (5-30)Z,
X représentant un ou plusieurs élément(s) choisi(s) dans l'ensemble constitué par Zr, V, Nb, Ta, Cr, Mo, W, Mn, Si, B et C, et Z représentant un ou plusieurs élément(s) choisi(s) dans l'ensemble constitué par Fe et Ni,
et dans lequel les éléments d'alliage, autres que le titane et l'aluminium, présents dans le matériau de substrat se trouvent en des quantités, exprimées en % at, pouvant atteindre leur teneur dans le matériau de substrat, le reste étant constitué de titane,
- et exposer le substrat et le matériau de brasage à une température élevée, de valeur située dans le domaine monophasé β du substrat, et assembler le substrat à l'interface de fissure par liaison en phase liquide transitoire.

3. Procédé selon n'importe laquelle des revendications 1 et 2, dans lequel la température de liaison élevée est choisie dans l'intervalle allant de 1400 °C à 1475 °C, sous réserve que cette température présente une valeur située dans le domaine monophasé β de l'alliage d'aluminure de titane γ.

4. Procédé selon la revendication 1, dans lequel le matériau de brasage est choisi parmi des alliages de titane dont la composition, exprimée en % at, répond à la formule Ti-20Al-20Fe, Ti-25Al-20Fe, Ti-20Al-20Ni ou Ti-30Al-18Ni.

5. Procédé selon n'importe lesquelles des revendications 1 à 4, dans lequel l'alliage d'aluminure de titane du substrat est un alliage dont la composition, exprimée en % at, répond à la formule Ti-45Al-(5-10)Nb-(0-0,5)B-(0-0,5)C.

6. Procédé selon n'importe lesquelles des revendications 1 à 5, dans lequel l'alliage d'aluminure de titane du substrat est choisi dans l'ensemble constitué par les alliages Ti-45Al-5Nb-0,2B-0,2C, Ti-45Al-8Nb-0,2C et Ti-43,5Al-4Nb-1Mo-0,1B.

7. Procédé selon n'importe lesquelles des revendications précédentes, dans lequel le matériau de brasage est une feuille de brasage ou une poudre de brasage.

8. Procédé selon la revendication 7, dans lequel le matériau de brasage se présente sous la forme d'une poudre mélangée à un flux de soudage organique.

9. Procédé selon la revendication 8, dans lequel le flux de soudage organique est choisi dans l'ensemble constitué par de la cire d'abeille, de la paraffine, de l'huile de palme, de l'huile d'olive, de l'acide oléique et des mélanges de ces substances.
